# FASCICULE DE BREVET EUROPEEN

(11) **EP 2 729 317 B1**
(45) Date de publication et mention de la délivrance du brevet: **09.09.2015**
(21) Numéro de dépôt: 12734981.9
(22) Date de dépôt: 20.06.2012
(51) Int. Cl.: B60K 6/12, F16L 3/06

(54) **DISPOSITIF DE FIXATION D'UN TUYAU DE RACCORDEMENT D'UN RESERVOIR HYDRAULIQUE SUR UN VEHICULE AUTOMOBILE**
VORRICHTUNG ZUR BEFESTIGUNG EINES HYDRAULIKSPEICHER-VERBINDUNGSSCHLAUCHS AN EINEM KRAFTFAHRZEUG
DEVICE FOR ATTACHING A HYDRAULIC RESERVOIR CONNECTION HOSE TO A MOTOR VEHICLE

(30) Priorité: 07.07.2011 FR 1156187
(43) Date de publication de la demande: 14.05.2014
(73) Titulaire: Technoboost, 75116 Paris (FR)
(72) Inventeur: PERRON, Frederic, F-94600 Choisy Le Roi (FR)
(74) Mandataire: Rosenberg, Muriel Sylvie
(86) Numéro de dépôt international: PCT/FR2012/051398
(87) Numéro de publication internationale: WO 2013/004936

(56) Documents cités:
- WO-A2-2009/020892
- US-A- 5 775 653
- US-A- 5 921 520

## Description

La présente invention concerne un dispositif de fixation d'un tuyau de raccordement d'un réservoir hydraulique sur un véhicule automobile

Le but de la présente invention est de fournir un dispositif qui permette, non seulement la fixation optimale et élastique d'un réservoir hydraulique sur la caisse d'un véhicule, mais également la fixation d'un tuyau de raccordement associé au réservoir. Le document US 5 921 520 décrit un dispositif selon le préambule de la revendication 1.

Un autre but de la présente invention est de fournir un tel dispositif, qui améliore considérablement la gestion de fixation des tuyaux d'un ensemble hydraulique embarqué.

Enfin, c'est également un but de la présente invention de fournir un tel dispositif de fixation d'un réservoir hydraulique et d'au moins un tube associé, qui soit, de manière générale, simple, stable, fiable et économique.

Pour parvenir à ces buts, la présente invention a pour objet un dispositif de fixation d'un tuyau de raccordement d'un réservoir hydraulique sur un véhicule automobile. Dans ce dispositif nouveau, le réservoir hydraulique est fixé par une pluralité de colliers circonférentiels sur un élément de la caisse du véhicule, et le dispositif de fixation du tuyau de raccordement associé au réservoir est constitué d'un support de collier immobilisé sur un collier et fixé rigidement audit élément de la caisse du véhicule. Le support de collier présente, d'une part, une partie dite « de fixation de tuyau », qui est, par sa géométrie, écartée du collier circonférentiel de façon à permettre le passage du tuyau de raccordement entre ledit collier et le support de collier et, d'autre part, un moyen de fixation du tuyau de raccordement sur ladite partie de fixation de tuyau.

Le support de collier est rigidement fixé à l'élément de la caisse du véhicule par l'intermédiaire de deux chapes latérales identiques, situées symétriquement de part et d'autre du réservoir hydraulique et destinées à être vissées sur ledit élément de la caisse du véhicule.

Selon un mode avantageux de réalisation de l'invention, les deux chapes latérales sont reliées audit support de collier par des éléments amortisseurs en matière élastique.

De préférence, ces éléments amortisseurs sont des cylindres amortisseurs, chaque cylindre amortisseur formant palier, dans une chape latérale, pour un axe lié rigidement au support de collier et situé en saillie externe de ce dernier.

De préférence également, chaque chape latérale est vissée sur l'élément de la caisse du véhicule par deux vis.

Selon le mode préféré de réalisation de l'invention, la partie dite de « fixation de tuyau », qui est « écartée » du collier circonférentiel pour permettre le passage du tuyau de raccordement entre ledit collier circonférentiel et le support de collier, est sensiblement de forme générale « en équerre » avec une partie sensiblement horizontale et une partie sensiblement verticale, le tuyau de raccordement étant fixé à la partie sensiblement horizontale par l'intermédiaire dudit moyen de fixation du tuyau.

Selon le mode préféré de réalisation de l'invention également, le moyen de fixation du tuyau est constitué par une agrafe de suspension en forme de « U » avec une forme de pince en extrémité de chaque branche, et cette agrafe est montée, de préférence, vissée sur la partie sensiblement horizontale de la partie de fixation de tuyau du support de collier.

En variante, l'agrafe de suspension du tuyau de raccordement peut être remplacée par tout moyen de suspension et de fixation équivalent, tel qu'un collier de fixation par exemple.

Selon l'invention, le support de collier présente, au voisinage de l'une et l'autre des deux parties de fixation de tuyau mentionnées ci-dessus, deux lumières de largeur au moins égale à la largeur du collier circonférentiel pour le passage de ce dernier sur le support de collier et, de cette façon, l'immobilisation du support de collier sur le collier circonférentiel et, par conséquent, sur le réservoir hydraulique.

De manière avantageuse, il est prévu un anneau circonférentiel en matière élastique, de type caoutchouc ou élastomère, entre la surface externe du réservoir hydraulique et le collier circonférentiel, de manière à constituer un amortisseur dans la transmission des vibrations du réservoir hydraulique vers la caisse du véhicule, le système de fixation du réservoir étant alors un système dit « filtré ».

L'élément de la caisse du véhicule peut avantageusement être constitué par un brancard du plancher arrière du véhicule.

D'autres buts, avantages et caractéristiques de l'invention apparaîtront dans la description qui suit d'un exemple de réalisation, non limitatif de l'objet et de la portée de la présente demande de brevet, accompagnée de dessins dans lesquels :
- la figure 1 est une vue en perspective, schématique, d'un réservoir hydraulique et d'un tuyau de raccordement de ce dernier, fixés tous les deux sous la caisse d'un véhicule, selon le principe de la présente invention,
- la figure 2 est une vue en perspective, schématique, plus détaillée, du dispositif de fixation de l'invention, et
- la figure 3 est une vue en coupe transversale, très schématique, du principe du dispositif de l'invention.

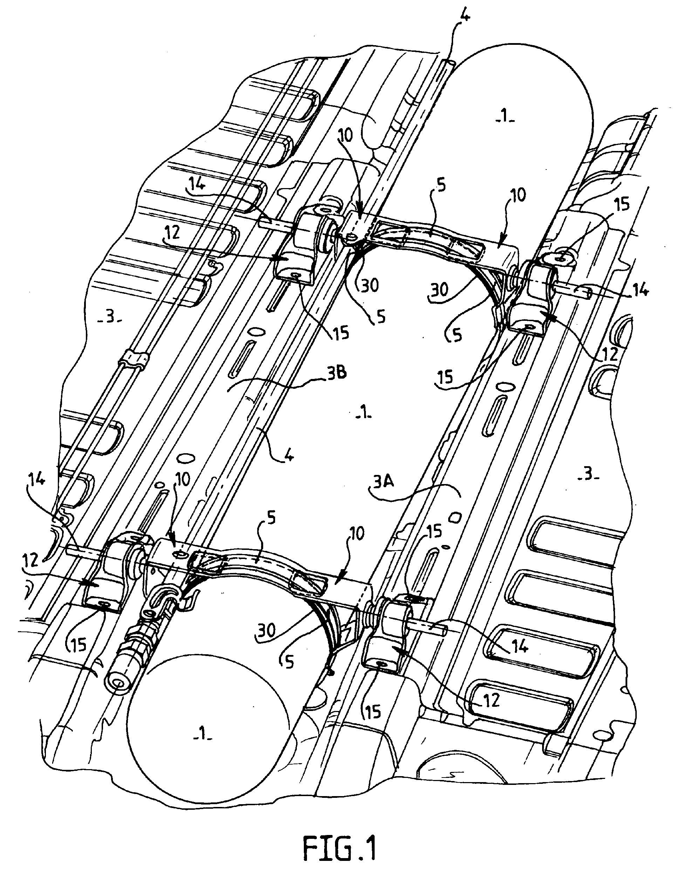

En référence au dessin de la figure 1, on a représenté une bonbonne ou réservoir hydraulique 1 d'un ensemble hydraulique embarqué sur un véhicule.

Ce réservoir hydraulique 1 est fixé sur la caisse du véhicule, référencé 3 de manière générale.

La référence 4 désigne un tuyau de raccordement du réservoir 1 à un autre élément de l'ensemble hydraulique embarqué, par exemple à un autre réservoir.

Selon le principe de la présente invention, on utilise, pour la fixation du tuyau de raccordement 4, le système de fixation du réservoir 1 sous le plancher arrière 3 du véhicule. Le fait de fixer un (ou plusieurs) tuyau (x) de raccordement sur le système de fixation « filtré » du réservoir hydraulique 1 permet de ne pas avoir de diversité sur la structure du véhicule.

Le réservoir hydraulique 1 est fixé par une pluralité de colliers circonférentiels identiques référencés 5 (deux colliers sont représentés sur le dessin de la figure 1). Un anneau, également circonférentiel, de matière élastique, de référence 30, de type caoutchouc par exemple, est inséré entre la surface externe du réservoir hydraulique 1 et chaque collier circonférentiel 5, de manière à constituer un amortisseur dans la transmission des vibrations du réservoir hydraulique 1 vers la caisse du véhicule.

Pour fixer un tuyau de raccordement 4 sur le moyen de fixation « filtré » à collier du réservoir hydraulique 1, il est prévu un support de collier, de référence générale 10, immobilisé sur le collier circonférentiel 5 et fixé rigidement sur deux brancards 3A et 3B du plancher arrière 3 du véhicule.

La fixation de ce support de collier 10 sur les deux brancards 3A et 3B de la structure du véhicule s'effectue par l'intermédiaire de deux chapes latérales identiques référencées 12, qui sont situées symétriquement de part et d'autre du réservoir hydraulique 1 et qui sont vissées sur l'un et l'autre des deux brancards 3A et 3B de la structure 3 du véhicule.

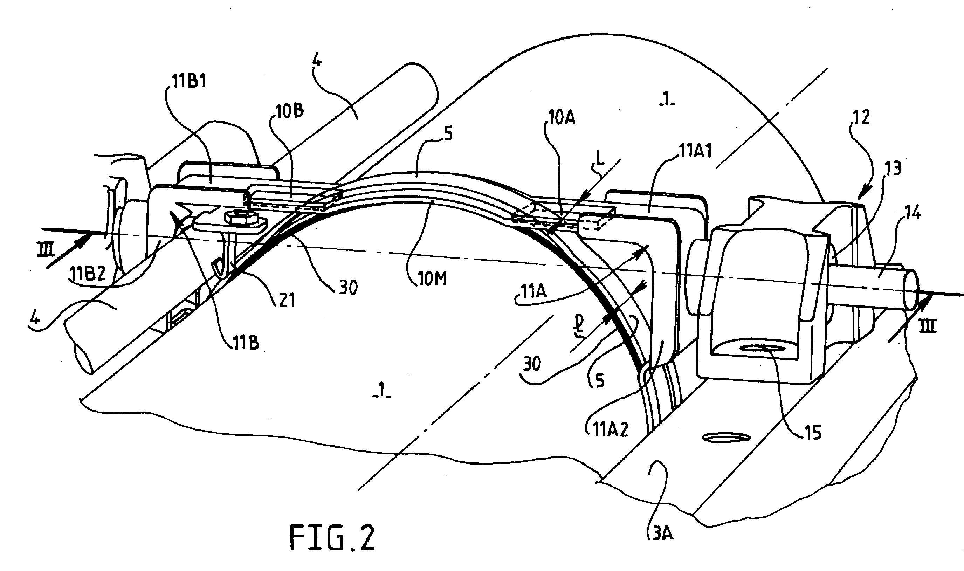

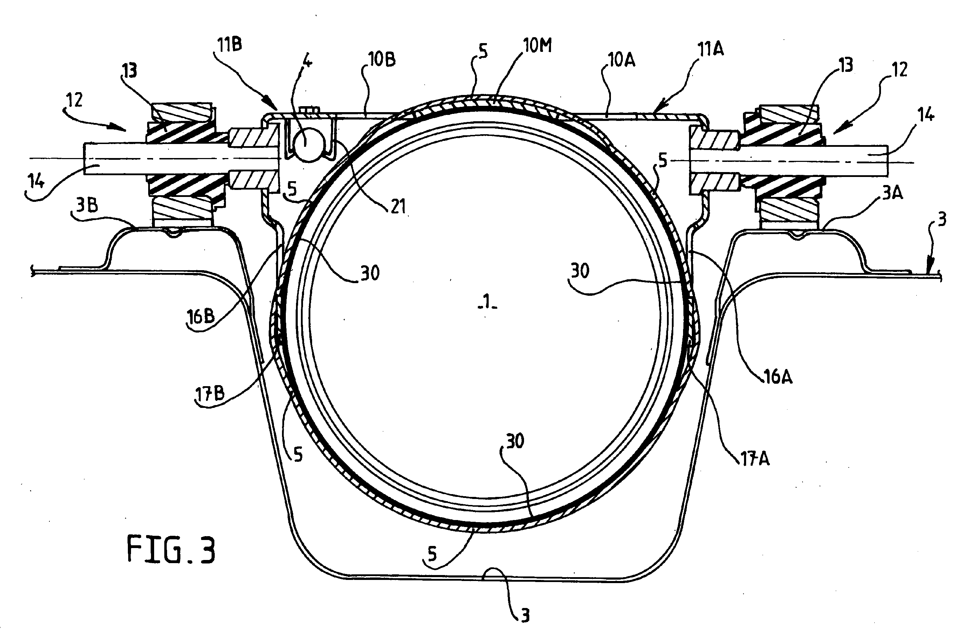

Les deux chapes latérales 12 sont reliées au support de collier 10 par l'intermédiaire de cylindres amortisseurs 13, chaque cylindre amortisseur 13 (voir figures 2 et 3) formant palier, dans cette chape 12, pour un axe 14 lié rigidement au support de collier 10 et situé en saillie externe de ce dernier.

Les deux chapes latérales 12 sont vissées sur les brancards 3A et 3B, respectivement, par deux vis 15 ou tout autre moyen de fixation équivalent.

La forme et les différentes parties constitutives du support de collier 10 sont décrites avec plus de détails ci-après en référence aux dessins des figures 2 et 3.

Le support de collier 10 présente plusieurs parties constitutives :
- deux parties latérales 11A et 11B, dites de « fixation du tuyau », qui sont « écartées » du collier circonférentiel 5 de façon à permettre le passage d'un tuyau de raccordement entre ledit collier 5 et le support de collier 10, cette partie portant le moyen de fixation, référencé 21, d'un tuyau de raccordement 4, et
- une partie médiane 10M, qui est prise en « sandwich » entre l'anneau circonférentiel de matière élastique 30 et le collier circonférentiel 5, et permet, en conséquence, la liaison rigide du support de collier 10 sur le réservoir 1, et
- deux lumières 10A et 10B, situées symétriquement au voisinage de l'une et l'autre des deux parties de fixation 11A et 11B, respectivement, la largeur « L » desdites lumières 10A et 10B étant au moins égale à la largeur « l » du collier circonférentiel 5, de façon à permettre le passage de ce dernier sur le support de collier 10 et, de cette façon, à permettre l'immobilisation du support de collier 10 sur le collier circonférentiel 5 et sur le réservoir hydraulique 1.

Comme représenté sur les figures, les parties dite « de « fixation de tuyau » 11A et 11B, qui sont « écartées » du collier 5 de façon à permettre le passage d'un tuyau de raccordement entre le collier circonférentiel 5 et le support de collier 10, sont sensiblement de forme générale en « équerre » avec une partie sensiblement horizontale 11A1, respectivement 11B1, et une partie sensiblement verticale 11A2, respectivement 11B2, le tuyau de raccordement 4 étant fixé à la partie sensiblement horizontale 11A1 ou 11A2 par l'intermédiaire d'un moyen de fixation référencé 21 du tuyau 4.

Ce moyen de fixation 21 du tuyau 4 est constitué par une agrafe de suspension, en forme générale de « U » avec une forme de pince en extrémité de chaque branche. Sur la figure 2, cette agrafe 21 est montée vissée sur la partie sensiblement horizontale 11B1 de la partie de fixation 11B du support de collier 10.

En référence au dessin de la figure 3, l'immobilisation du support de collier 10 est assurée, non seulement par la partie médiane 10M et les deux lumières rectangulaires 10A et 10B comme exposé précédemment, mais aussi par deux prolongements latéraux du support de collier, sensiblement verticaux, situés symétriquement de part et d'autre du réservoir 1. Ces deux prolongements latéraux, référencés 17A et 17B, viennent s'insérer entre l'anneau circonférentiel en matière plastique 30 et le collier circonférentiel 5, grâce à la présence de deux lumières rectangulaires 16A et 16B, adjacentes des deux prolongements 17A et 17B, respectivement, qui permettent le passage traversant du collier circonférentiel 5 sur le support de collier 10.

Le dispositif de fixation d'un réservoir hydraulique sur un véhicule automobile, décrit ci-dessus présente de nombreux avantages, parmi lesquels les avantages suivants :
- il permet la fixation d'un (ou plusieurs) tuyau (x) de raccordement associé(s) au réservoir hydraulique en utilisant pour cette fixation le moyen même de fixation du réservoir sous le plancher arrière du véhicule,
- il améliore la gestion de fixation des tuyaux associés au réservoir hydraulique,
- il est de conception, de réalisation et de montage simples,
- il est économique, notamment par le fait qu'il utilise la fixation du réservoir.

## Revendications

1. Dispositif de fixation d'un tuyau de raccordement d'un réservoir hydraulique sur un véhicule automobile, ledit réservoir hydraulique (1) étant fixé par une pluralité de colliers (5) sur un élément de la caisse du véhicule, **caractérisé en ce que** le dispositif de fixation dudit tuyau de raccordement (4) est constitué d'un support de collier (10) immobilisé sur un collier circonférentiel (5) et fixé rigidement audit élément de caisse du véhicule, ledit support de collier (10) présentant, d'une part, une partie (11) dite de « fixation du tuyau » qui est écartée du collier circonférentiel (5) de façon à permettre le passage du tuyau de raccordement (4) entre le collier circonférentiel (5) et le support de collier (10) et, d'autre part, un moyen de fixation dudit tuyau de raccordement (4) sur ladite partie de fixation du tuyau (11).

2. Dispositif selon la revendication 1, **caractérisé en ce que** ledit support de collier (10) est rigidement fixé audit élément de la caisse du véhicule par l'intermédiaire de deux chapes latérales identiques (12) situées de part et d'autre du réservoir hydraulique (1), destinées à être vissées sur ledit élément de la caisse du véhicule.

3. Dispositif selon la revendication 2, **caractérisé en ce que** les deux chapes latérales (12) sont reliées audit support de collier (10) par des éléments amortisseurs en matière élastique.

4. Dispositif selon la revendication 3, caractérisé en e que lesdits éléments amortisseurs sont des cylindres amortisseurs (13), chaque cylindre amortisseur (13) formant palier, dans cette chape (12), pour un axe (14) lié rigidement au support de collier (10) et situé en saillie externe de ce dernier.

5. Dispositif selon l'une quelconque des revendications 2 à 4, caractérisé en ce chaque chape latérale (12) est vissée sur ledit élément de la caisse du véhicule par deux vis (15).

6. Dispositif selon la revendication 1, **caractérisé en ce que** ladite partie dite de « fixation du tuyau » (11A, 11B), qui est écartée du collier circonférentiel (5) de façon à permettre le passage du tuyau de raccordement (4) entre le collier circonférentiel (5) et le support de collier (10), est sensiblement de forme générale en équerre avec une partie sensiblement horizontale (11A1, 11B1) et une partie sensiblement verticale (11A2, 11B2), le tuyau de raccordement (4) étant fixé à la partie sensiblement horizontale (11A1, 11B1) par l'intermédiaire dudit moyen de fixation du tuyau (20).

7. Dispositif selon l'une quelconque des revendications 1 et 6, **caractérisé en ce que** ledit moyen de fixation du tuyau est constitué par une agrafe (21) en forme de « U » avec une forme de pince en extrémité de chaque branche.

8. Dispositif selon la revendication 7, **caractérisé en ce que** ladite agrafe (21) est montée vissée sur la partie sensiblement horizontale (11A1, 11B1) de la partie de fixation (11A, 11B) du support de collier (10).

9. Dispositif selon la revendication 1, **caractérisé en ce que** ledit support de collier (10) présente, au voisinage de l'une et l'autre des deux parties de fixation (11A, 11B), deux lumières (10A, 10B) de largeur (« L ») au moins égale à la largeur (« l ») du collier circonférentiel (5) pour le passage de ce dernier sur le support de collier (10) et, de cette façon, l'immobilisation dudit support de collier (10) sur le collier circonférentiel (5) et sur le réservoir hydraulique (1).

10. Dispositif selon l'une quelconque des revendications 1 à 9, **caractérisé en ce qu'**il est prévu un anneau de matière élastique (30), de type caoutchouc, entre la surface externe du réservoir hydraulique (1) et le collier circonférentiel (5), de manière à constituer un amortisseur dans la transmission des vibrations du réservoir hydraulique (1) vers la caisse du véhicule.

11. Dispositif selon l'une quelconque des revendications 1 à 10, **caractérisé en ce que** ledit élément de la caisse du véhicule est constitué par un brancard (3A, 3B) du plancher arrière (3) du véhicule.

12. Véhicule automobile équipé d'un réservoir hydraulique (1) placé sous le plancher arrière (3) du véhicule et au moins un tuyau de raccordement (4) associé audit réservoir hydraulique (1), **caractérisé en ce qu'**il est prévu un dispositif de fixation dudit tuyau (4) qui est conforme à l'une quelconque des revendications 1 à 11.

## Patentansprüche

1. Vorrichtung zur Befestigung eines Hydraulikspeicher-Verbindungsschlauchs auf einem Kraftfahrzeug, wobei der Hydraulikspeicher (1) durch mehrere Schellen (5) auf einem Element der Fahrzeugkarosserie befestigt ist, **dadurch gekennzeichnet, dass** die Befestigungsvorrichtung des Verbindungsschlauchs (4) aus einem Schellenträger (10) besteht, der auf einer umfänglichen Schelle (5) stillgestellt und starr an dem Karosserieelement des Fahrzeugs befestigt ist, wobei der Schellenträger (10) einerseits einen Teil (11), "Schlauchbefestigung" genannt, der von der umfänglichen Schelle (5) derart abgespreizt ist, dass die Passage der Schlauchverbindung (4) zwischen der umfänglichen Schelle (5) und dem Schellenträger (10) erlaubt wird, und, andererseits, ein Befestigungsmittel des Verbindungsschlauchs (4) auf dem Befestigungsteil des Schlauchs (11) aufweist.

2. Vorrichtung nach Anspruch 1, **dadurch gekennzeichnet, dass** der Schlauchträger (10) starr an dem Karosserieelement des Fahrzeugs über zwei seitliche identische Gabeln (12) befestigt ist, die zu beiden Seiten des Hydraulikspeichers (1) liegen, die dazu bestimmt sind, auf das Element der Fahrzeugkarosserie geschraubt zu werden.

3. Vorrichtung nach Anspruch 2, **dadurch gekennzeichnet, dass** die zwei seitlichen Gabeln (12) mit dem Schellenträger (10) durch Dämpfelemente aus federndem Material verbunden sind.

4. Vorrichtung nach Anspruch 2, **dadurch gekennzeichnet, dass** die Dämpfelemente Dämpfzylinder (13) sind, wobei jeder Dämpfzylinder (13) ein Lager in dieser Gabel (12) für eine Achse (14) bildet, die starr mit dem Schellenträger (10) verbunden ist und aus diesem nach außen vorsteht.

5. Vorrichtung nach einem der Ansprüche 2 bis 4, **dadurch gekennzeichnet, dass** jede seitliche Gabel (12) durch zwei Schrauben (15) auf das Element der Fahrzeugkarosserie geschraubt ist.

6. Vorrichtung nach Anspruch 1, **dadurch gekennzeichnet, dass** der "Schlauchbefestigung" genannte Teil (11A, 11B), der von der umfänglichen Schelle (5) derart abgespreizt ist, dass die Passage des Verbindungsschlauchs (4) zwischen der umfänglichen Schelle (5) und dem Schellenträger (10) erlaubt wird, im Wesentlichen allgemeine Winkelform hat, mit einem im Wesentlichen horizontalen Teil (11A1, 11B1) und einem im Wesentlichen vertikalen Teil (11A2, 11B2), wobei der Verbindungsschlauch (4) an dem im Wesentlichen horizontalen Teil (11A, 11B1) über das Befestigungsmittel des Schlauchs (20) befestigt ist.

7. Vorrichtung nach einem der Ansprüche 1 und 6, **dadurch gekennzeichnet, dass** das Befestigungsmittel des Schlauchs aus einer Klammer (21) in "U"-Form mit einer Zangenform am Ende jedes Schenkels besteht.

8. Vorrichtung nach Anspruch 7, **dadurch gekennzeichnet, dass** die Klammer (21) auf den im Wesentlichen horizontalen Teil (11A1, 11B1) des Befestigungsteils (11A, 11B) des Schellenträgers (10) geschraubt montiert ist.

9. Vorrichtung nach Anspruch 1, **dadurch gekennzeichnet, dass** der Schellenträger (10) in der Nähe des einen und des anderen der zwei Befestigungsteile (11A, 11B) zwei Langlöcher (10A, 10B) mit Breite ("L") mindestens gleich der Breite ("l"), der umfänglichen Schelle (5) für die Passage dieser Letzteren auf dem Schellenträger (10) und auf diese Art die Stillstellung des Schellenträgers (10) auf der umfänglichen Schelle (5) und auf dem Hydraulikspeicher (1) aufweist.

10. Vorrichtung nach einem der Ansprüche 1 bis 9, **dadurch gekennzeichnet, dass** ein Ring aus elastischem Material (30) des Typs Kautschuk zwischen der äußeren Oberfläche des Hydraulikspeichers (1) und der umfänglichen Schelle (5) derart vorgesehen ist, dass ein Dämpfer der Schwingungsübertragung von dem Hydraulikspeicher (1) zu der Fahrzeugkarosserie gebildet wird.

11. Vorrichtung nach einem der Ansprüche 1 bis 10, **dadurch gekennzeichnet, dass** das Karosserieelement des Fahrzeugs aus einem Bodenlängsträger (3A, 3B) des hinteren Fußbodens (3) des Fahrzeugs besteht.

12. Kraftfahrzeug, das mit einem Hydraulikspeicher (1) ausgestattet ist, der unter dem hinteren Fußboden (3) des Fahrzeugs platziert ist, und mit mindestens einem Verbindungsschlauch (4), der zu dem Hydraulikspeicher (1) gehört, **dadurch gekennzeichnet, dass** eine Befestigungsvorrichtung des Schlauchs (4) vorgesehen ist, die einem der Ansprüche 1 bis 11 entspricht.

## Claims

1. A device for attaching a hydraulic reservoir connection hose to a motor vehicle, said hydraulic reservoir (1) being attached by a plurality of bands (5) on an element of the body shell of the vehicle **characterized in that** the attaching device of said connection hose (4) is constituted by a band support (10) immobilised on a circumferential band (5) and rigidly attached to said body shell element of the vehicle, said band support (10) having, on the one hand, a part (11) designated "hose attachment part", which is separated from the circumferential band (5) so as to permit the passage of the connection hose (4) between the circumferential band (5) and the band support (10) and, on the other hand, having an attachment means of said connection hose (4) on said attachment part of the hose (11).

2. The device according to Claim 1, **characterized in that** said band support (10) is rigidly attached to said body shell element of the vehicle by means of two identical lateral yokes (12) situated on either side of the hydraulic reservoir (1), intended to be screwed on said body shell element of the vehicle.

3. The device according to Claim 2, **characterized in that** the two lateral yokes (12) are connected to said band support (10) by damper elements of elastic material.

4. The device according to Claim 3, **characterized in that** said damper elements are damper cylinders (13), each damper cylinder (13) forming a bearing, in this yoke (12), for an axis (14) rigidly connected to the band support (10) and situated projecting externally from the latter.

5. The device according to any one of Claims 2 to 4, **characterized in that** each lateral yoke (12) is screwed on said body shell element of the vehicle by two screws (15).

6. The device according to Claim 1, **characterized in that** said part designated "hose attachment part" (11A, 11B), which is separated from the circumferential band (5) so as to permit the passage of the connection hose (4) between the circumferential band (5) and the band support (10), is substantially of a general corner angle shape, with a substantially horizontal part (11A1, 11B1) and a substantially vertical part (11A2, 11B2), the connection hose (4) being attached to the substantially horizontal part (11A1, 11B1) by means of said attachment means of the hose (20).

7. The device according to any one of Claims 1 and 6, **characterized in that** said attachment means of the hose is constituted by a U-shaped clamp (21) with a clip shape at the end of each branch.

8. The device according to Claim 7, **characterized in that** said clamp (21) is mounted in a screwed manner on the substantially horizontal part (11A1, 11B1) of the attachment part (11A, 11B) of the band support (10).

9. The device according to Claim 1, **characterized in that** said band support (10) has, in the vicinity of both of the two attachment parts (11A, 11B), two slots (10A, 10B) of width ("L") at least equal to the width ("l") of the circumferential band (5) for the passage of the latter on the band support (10) and, in this way, for the immobilisation of said band support (10) on the circumferential band (5) and on the hydraulic reservoir (1).

10. The device according to any one of Claims 1 to 9, **characterized in that** a ring of elastic material (30), of the rubber type, is provided between the external surface of the hydraulic reservoir (1) and the circumferential band (5), so as to constitute a damper in the transmission of the vibrations of the hydraulic reservoir (1) towards the body shell of the vehicle.

11. The device according to any one of Claims 1 to 10, **characterized in that** said body shell element of the vehicle is constituted by a side rail (3A, 3B) of the rear floor (3) of the vehicle.

12. A motor vehicle equipped with a hydraulic reservoir (1) placed beneath the rear floor (3) of the vehicle and at last one connection hose (4) associated with said hydraulic reservoir (1), **characterized in that** an attachment device of said hose (4) is provided which is in accordance with any one of Claims 1 to 11.
